# EUROPEAN PATENT APPLICATION

(11) **EP 4 738 640 A1**
(43) Date of publication of application: **06.05.2026**
(21) Application number: 24831680.4
(22) Date of filing: 13.06.2024
(51) Int. Cl.: H02J 7/00, B60L 3/00, B60L 58/18, H02M 3/28

(54) **POWER SUPPLY SYSTEM AND CONTROL PROGRAM**

(30) Priority: 30.06.2023 JP 2023108740
(71) Applicant: DENSO CORPORATION, Kariya-city, Aichi 448-8661 (JP)
(72) Inventor: KURACHI, Taisuke, Kariya-city, Aichi 448-8661 (JP); SHIMIZU, Takumi, Kariya-city, Aichi 448-8661 (JP); IWAMURA, Takahiro, Kariya-city, Aichi 448-8661 (JP); KUBO, Shunichi, Kariya-city, Aichi 448-8661 (JP); ITO, Mitsutaka, Nisshin-city, Aichi 470-0111 (JP)
(74) Representative: TBK
(86) International application number: PCT/JP2024/021431
(87) International publication number: WO 2025/004815

(57) **Abstract**

A power supply system (10) includes a plurality of main batteries (31, 61) connected in parallel to a power supply bus (11, 12), and at least a single conversion circuit (40) that converts power input from the main batteries to a primary-side terminal pair (41, 42) and outputs the converted power from a secondary-side terminal pair (47, 48). A positive electrode and a negative electrode of the main battery are respectively connected to the primary-side terminal pair of the conversion circuit. The secondary-side terminal pair of the conversion circuit are connectable in series to the main battery. The secondary-side terminal pair of the conversion circuit are connectable in parallel to a low-voltage load (22).

## Description

### [Cross-Reference to Related Application]

The present application is based on and claims the benefit of priority from Japanese Patent Application No. 2023-108740, filed on June 30, 2023, the description of which is incorporated herein by reference.

### [Technical Field]

The present disclosure relates to a power supply system.

### [Background Art]

For example, there is a power supply system that includes a first converter and a second converter that receive power supply from a high-voltage battery, and a low-voltage load that receives power supply from at least one of the first converter and the second converter (see PTL 1). In the power supply system described in PTL 1, power can be supplied to the low-voltage load from the second converter if the first converter fails. The power supply for the low-voltage load can be provided with redundancy.

### [Citation List]

### [Patent Literature]

[PTL 1] JP 7198606 B2

### [Summary]

Incidentally, a power supply system in which a plurality of high-voltage batteries (main batteries) are connected in parallel to a power supply bus requires a partial step-up converter (partial power converter (PPC)) that adjusts voltage difference between the high-voltage batteries. The discloser of the present application has focused on a possibility of reducing the number of redundant power supplies if the PPC is able to be used as a power supply for the low-voltage load.

The present disclosure has been achieved to solve the above-described issues. A main object of the present disclosure is to enable a PPC to be used as a power supply for a low-voltage load in a power supply system in which a plurality of main batteries are connected in parallel to a power supply bus.

A first means for solving the above-described issues is a power supply system including a plurality of main batteries connected in parallel to a power supply bus, and at least a single conversion circuit that converts power input from the main batteries to a primary-side terminal pair and outputs the converted power from a secondary-side terminal pair, in which: a positive electrode and a negative electrode of the main battery are respectively connected to the primary-side terminal pair of the conversion circuit; the secondary-side terminal pair of the conversion circuit are connectable in series to the main battery; and the secondary-side terminal pair of the conversion circuit are connectable in parallel to a low-voltage load.

As a result of the above-described configuration, the plurality of main batteries are connected in parallel to the power supply. Therefore, power can be supplied from the plurality of main batteries to the power supply bus. At least the single conversion circuit converts power input from the main batteries to the primary-side terminal pair and outputs the converted power from the secondary-side terminal pair.

Here, the positive electrode and the negative electrode of the main battery are respectively connected to the primary-side terminal pair of the conversion circuit. The secondary-side terminal pair of the conversion circuit are connectable in series to the main battery. Therefore, in a state in which the secondary-side terminal pair of the conversion circuit are connected in series to the main battery, an output voltage Vo of the conversion circuit can be added to an output voltage Vb of the main battery. The conversion circuit (PPC) can adjust a voltage difference between the main batteries. At this time, the output voltage Vo requested of the conversion circuit can be reduced compared to a configuration in which the main battery is connected in parallel to the secondary-side terminal pair of the conversion circuit. Therefore, a rated voltage of the conversion circuit can be reduced, and a rated capacity of the conversion circuit can be reduced. Consequently, the conversion circuit can be made smaller in size.

In addition, the secondary-side terminal pair of the conversion circuit are connectable in parallel to the low-voltage load. Therefore, in a state in which the secondary-side terminal pair of the conversion circuit is connected in parallel to the low-voltage load, power can be supplied from the secondary-side terminal pair of the conversion circuit to the low-voltage load. Here, because the output voltage Vo requested of the conversion circuit during adjustment of the voltage difference between the main batteries 31 is low, the conversion circuit is suitable for supplying power to the low-voltage load. Consequently, the conversion circuit can be used as a power supply for the low-voltage load, and the number of redundant power supplies can be reduced.

A second means includes: a series path that connects the secondary-side terminal pair of the conversion circuit to the main battery in series; a first relay that disconnects and connects the series path; a bus connection path that connects a secondary-side terminal that, of the secondary-side terminal pair of the conversion circuit, is on a side opposite the main battery, to the power supply bus; a second relay that disconnects and connects the bus connection path; a negative-electrode-side path and a positive-electrode-side path that connect the secondary-side terminal pair of the conversion circuit to the low-voltage load in parallel; a third relay that disconnects and connects the negative-electrode-side path; and a fourth relay that disconnects and connects the positive-electrode-side path.

As a result of the above-described configuration, in a state in which the first relay and the second relay are connected, the output voltage Vo of the conversion circuit can be added to the output voltage Vb of the main battery. The conversion circuit can adjust the voltage difference between the main batteries. At this time, as a result of the third relay and the fourth relay being disconnected, the high-voltage path supplying a high voltage to the power supply bus and the low-voltage path supplying a low voltage to the low-voltage load can be isolated from each other. In addition, in a state in which the third relay and the fourth relay are connected, power can be supplied from the secondary-side terminal pair of the conversion circuit to the low-voltage load. At this time, as a result of the third relay and the fourth relay being disconnected, the high-voltage path and the low-voltage path can be isolated from each other.

A third means includes a control unit that connects the first relay and the second relay and disconnects the third relay and the fourth relay in response to executing a voltage adjustment mode in which power is supplied from the secondary-side terminal pair of the conversion circuit to the power supply bus, and that disconnects the first relay and the second relay and connects the third relay and the fourth relay in response to executing a low-voltage power supply mode in which power is supplied from the secondary-side terminal pair of the conversion circuit to the low-voltage load.

As a result of the above-described configuration, hen executing the voltage adjustment mode in which power is supplied from the secondary-side terminal pair of the conversion circuit to the power supply bus, the control unit connects the first relay and the second relay, and disconnects the third relay and the fourth relay. Therefore, in the voltage adjustment mode, the conversion circuit can adjust the voltage difference between the main batteries while the high-voltage path and the low-voltage path are isolated from each other. In addition, in response to executing the low-voltage power supply mode in which power is supplied from the secondary-side terminal pair of the conversion circuit to the low-voltage load, the control unit disconnects the first relay and the second relay, and connects the third relay and the fourth relay. Therefore, in the low-voltage power supply mode, power can be supplied from the secondary-side terminal pair of the conversion circuit to the low-voltage load while the high-voltage path and the low-voltage path are isolated from each other.

According to a fourth means, the control unit disconnects the third relay and the fourth relay and then connects the first relay and the second relay in response to executing the voltage adjustment mode, and disconnects the first relay and the second relay and then connects the third relay and the fourth relay in response to executing the low-voltage power supply mode.

As a result of the above-described configuration, in response to executing the voltage adjustment mode, the control unit disconnects the third relay and the fourth relay and then connects the first relay and the second relay. Therefore, the voltage adjustment mode can be executed after the high-voltage path and the low-voltage path are isolated from each other with certainty. In addition, in response to executing the low-voltage power supply mode, the control unit disconnects the first relay and the second relay, and then connects the third relay and the fourth relay. Therefore, the low-voltage power supply mode can be executed after the high-voltage path and the low-voltage path are isolated from each other with certainty.

A fifth means includes a step-down converter that is connected to the power supply bus, steps down voltage of power input from the power supply bus, and outputs the stepped-down power to the low-voltage load. The control unit performs switching from the low-voltage power supply mode to the voltage adjustment mode after starting the step-down converter, and stops the step-down converter after performing switching from the voltage adjustment mode to the low-voltage power supply mode.

As a result of the above-described configuration, the step-down converter is connected to the power supply bus, steps down the power input from the power supply bus, and outputs the stepped-down power to the low-voltage load. Therefore, power can be supplied to the low-voltage load from the conversion circuit executing the low-voltage power supply mode and the step-down converter. Here, the control unit switches from the low-voltage power supply mode to the voltage adjustment mode after starting the step-down converter. Therefore, transition from the low-voltage power supply mode to the voltage adjustment mode can be made without the power supply to the low-voltage load being interrupted. In addition, the control unit stops the step-down converter after switching from the voltage adjustment mode to the low-voltage power supply mode. Therefore, the step-down converter can be stopped without the power supply to the low-voltage load being interrupted.

According to a sixth means, the power supply system is mounted in a vehicle and includes: a state determination unit that determines a state of the vehicle; and a control unit that executes a voltage adjustment mode in which power is supplied from the secondary-side terminal pair of the conversion circuit to the power supply bus in response to the state determination unit determining that the vehicle is in a mode in which the plurality of main batteries are connected in parallel to the power supply bus and charged or discharged, and executes a low-voltage power supply mode in which power is supplied from the secondary-side terminal pair of the conversion circuit to the low-voltage load in response to the state determination unit determining that the vehicle is in a mode in which the plurality of main batteries are not connected in parallel to the power supply bus or a mode in which the plurality of main batteries are not charged or discharged.

As a result of the above-described configuration, in response to the state determination unit determining that the vehicle is in the mode in which the plurality of main batteries are connected in parallel to the power supply bus and charged or discharged (for example, the vehicle may be in operation), the control unit executes the voltage adjustment mode in which power is supplied from the secondary-side terminal pair of the conversion circuit to the power supply bus. Therefore, while the vehicle is in operation, for example, as a result of the voltage adjustment mode being executed, power can be supplied from the main battery to the power supply bus while the conversion circuit adjusts the voltage difference between the main batteries. In addition, in response to the state determination unit determining that the vehicle is in the mode in which the plurality of main batteries are not connected in parallel to the power supply bus or the mode in which the plurality of main batteries are not charged or discharged (for example, the vehicle may be stopped), the control unit executes the low-voltage power supply mode in which power is supplied from the secondary-side terminal pair of the conversion circuit to the low-voltage load. Therefore, while the vehicle is stopped, for example, as a result of the low-voltage power supply mode being executed, power can be supplied from the conversion circuit to the low-voltage load. Consequently, a dedicated low-voltage power supply for supplying power to the low-voltage load while the vehicle is stopped is not required to be provided.

According to a seventh means, a low-voltage power supply is connected to the low-voltage load. The seventh means includes: an abnormality determination unit that determines whether the low-voltage power supply is abnormal; and a control unit that executes a voltage adjustment mode in which power is supplied from the secondary-side terminal pair of the conversion circuit to the power supply bus in response to the abnormality determination unit determining that the low-voltage power supply is not abnormal, and executes a low-voltage power supply mode in which power is supplied from the secondary-side terminal pair of the conversion circuit to the low-voltage load in response to the abnormality determination unit determining that the low-voltage power supply is abnormal.

As a result of the above-described embodiment, in response to the abnormality determination unit determining that the low-voltage power supply is not abnormal, the control unit executes the voltage adjustment mode in which power is supplied from the secondary-side terminal pair of the conversion circuit to the power supply bus. Therefore, in response to the low-voltage power supply not being abnormal, as a result of the voltage adjustment mode being executed, power can be supplied from the main battery to the power supply bus while the conversion circuit adjusts the voltage difference between the main batteries. In addition, in response to the abnormality determination unit determining that the low-voltage power supply is abnormal, the control unit executes the low-voltage power supply mode in which power is supplied from the secondary-side terminal pair of the conversion circuit to the low-voltage load. Therefore, in response to the low-voltage power supply not being normal, as a result of the low-voltage power supply mode being executed, power can be supplied from the conversion circuit to the low-voltage load. Consequently, the number of redundant power supplies can be reduced.

According to an eighth means, a high-voltage load is connected to the power supply bus. The eighth means includes: a power calculation unit that calculates a high-voltage power request value that is power requested by the high-voltage load, and a low-voltage power request value that is power requested by the low-voltage load; and a control unit that executes a voltage adjustment mode in which power is supplied from the secondary-side terminal pair of the conversion circuit to the power supply bus in response to the high-voltage power request value calculated by the power calculation unit being greater than a first prescribed value or in response to the low-voltage power request value calculated by the power calculation unit being less than a second prescribed value, and executes a low-voltage power supply mode in which power is supplied from the secondary-side terminal pair of the conversion circuit to the low-voltage load in response to the high-voltage power request value calculated by the power calculation unit being less than the first prescribed value or in response to the low-voltage power request value calculated by the power calculation unit being greater than the second prescribed value.

As a result of the above-described configuration, the control unit executes the voltage adjustment mode in which power is supplied from the secondary-side terminal pair of the conversion circuit to the power supply bus in response to the high-voltage power request value calculated by the power calculation unit being greater than the first prescribed value or in response to the low-voltage power request value calculated by the power calculation unit being less than the second prescribed value. Therefore, in response to the high-voltage power request value being greater than the first prescribed value or in response to the low-voltage power request being less than the second prescribed value, as a result of the voltage adjustment mode being executed, power can be supplied from the main battery to the power supply bus while the conversion circuit adjusts the voltage difference between the main batteries. In addition, the control unit executes the low-voltage power supply mode in which power is supplied from the secondary-side terminal pair of the conversion circuit to the low-voltage load in response to the high-voltage power request value calculated by the power calculation unit being less than the first prescribed value or in response to the low-voltage power request value calculated by the power calculation unit being greater than the second prescribed value. Therefore, in response to the high-voltage power request value being less than the first prescribed value or in response to the low-voltage power request being greater than the second prescribed value, as a result of the low-voltage power supply mode being executed, power can be supplied from the conversion circuit to the low-voltage load. Consequently, switching between the voltage adjustment mode and the low-voltage power supply mode based on the high-voltage power request value and the low-voltage power request value is possible.

According to a ninth means, the conversion circuit includes a secondary-side voltage sensor that detects a voltage across the secondary-side terminal pair. The ninth means includes a control unit that controls an output voltage of the conversion circuit based on the voltage detected by the secondary-side voltage sensor during execution of a voltage adjustment mode in which power is supplied from the secondary-side terminal pair of the conversion circuit to the power supply bus, and controls the output voltage of the conversion circuit based on the voltage detected by the secondary-side voltage sensor during execution of a low-voltage power supply mode in which power is supplied from the secondary-side terminal pair of the conversion circuit to the low-voltage load.

As a result of the above-described configuration, the control unit can use the voltage detected by the secondary-side voltage sensor both in response to executing the voltage adjustment mode and the low-voltage power supply mode.

According to a tenth means, a high-voltage load is connected to the main battery to which the secondary-side terminal pair of the conversion circuit are connectable in series, or a charging apparatus is connected to the main battery to which the secondary-side terminal pair of the conversion circuit is not able to be connected in series.

As a result of the above-described configuration, a charging amount of the main battery to which the high-voltage load is connected can be reduced and the output voltage Vb of the main battery can be reduced. Alternatively, a charging amount of the main battery to which the charging apparatus is connected can be increased and the output voltage Vb of the main battery can be increased. That is, the output voltage Vb of the main battery to which the secondary-side terminal pair of the conversion circuit are connectable in series can be reduced relative to the output voltage Vb of the main battery to which the secondary-side terminal pair of the conversion circuit is not able to be connected in series. Therefore, control in which the output voltage Vo of the conversion circuit is added to the output voltage Vb of the main battery is facilitated. The conversion circuit can more easily adjust the voltage difference between the main batteries.

An eleventh means includes: a predetermined path that connects a primary-side terminal that, of the primary-side terminal pair of the conversion circuit, is connected between the main battery and the secondary-side terminal pair, to the power supply bus; and a predetermined relay that disconnects and connects the predetermined path. As a result of such a configuration, power can be directly supplied from the main battery to the power supply bus by the predetermined path being connected by the predetermined relay. Therefore, for example, in a state in which the first relay and the second relay are disconnected and the third relay and the fourth relay are connected, power can be supplied to the power supply bus and the low-voltage load while the high-voltage path and the low-voltage path are isolated from each other.

A twelfth means is a control program applied to a power supply system that includes: a plurality of main batteries connected in parallel to a power supply bus; at least a single conversion circuit that converts power input from the main batteries to a primary-side terminal pair and outputs the converted power from a secondary-side terminal pair; a series path that connects the secondary-side terminal pair of the conversion circuit to the main battery in series; a first relay that disconnects and connects the series path; a bus connection path that connects a secondary-side terminal that, of the secondary-side terminal pair of the conversion circuit, is on a side opposite the main battery, to the power supply bus; a second relay that disconnects and connects the bus connection path; a negative-electrode-side path and a positive-electrode-side path that connect the secondary-side terminal pair of the conversion circuit to a low-voltage load in parallel; a third relay that disconnects and connects the negative-electrode-side path; and a fourth relay that disconnects and connects the positive-electrode-side path, in which a positive electrode and a negative electrode of the main battery are respectively connected to the primary-side terminal pair of the conversion circuit, the secondary-side terminal pair of the conversion circuit are connectable in series to the main battery, and the secondary-side terminal pair of the conversion circuit are connectable in parallel to the low-voltage load, the control program causing a computer to perform a process in which the first relay and the second relay are connected and the third relay and the fourth relay are disconnected in response to a voltage adjustment mode in which power is supplied from the secondary-side terminal pair of the conversion circuit to the power supply bus being executed, and the first relay and the second relay are disconnected and the third relay and the fourth relay are connected in response to a low-voltage power supply mode in which power is supplied from the secondary-side terminal pair of the conversion circuit to the low-voltage load being executed.

As a result of the above-described configuration, working effects similar to those of the third means can be achieved by the computer being made to run the control program applied to the power supply system.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a circuit diagram illustrating a power supply system;
Fig. 2 is a circuit diagram illustrating an example of a conversion circuit;
Fig. 3 is a circuit diagram illustrating relay states and currents in a voltage adjustment mode;
Fig. 4 is a circuit diagram illustrating relay states and currents in a 12V-DCDC mode;
Fig. 5 is a flowchart illustrating steps for mode switching according to a first embodiment;
Fig. 6 is a flowchart illustrating steps for mode switching according to a second embodiment;
Fig. 7 is a flowchart illustrating steps for mode switching according to a third embodiment;
Fig. 8 is a flowchart illustrating steps for mode switching according to a fourth embodiment;
Fig. 9 is a circuit diagram illustrating a modification of the power supply system;
Fig. 10 is a circuit diagram illustrating another modification of the power supply system;
Fig. 11 is a circuit diagram illustrating another modification of the power supply system;
Fig. 12 is a circuit diagram illustrating another modification of the power supply system;
Fig. 13 is a circuit diagram illustrating another modification of the power supply system;
Fig. 14 is a circuit diagram illustrating a modification of the conversion circuit;
Fig. 15 is a circuit diagram illustrating another modification of the conversion circuit;
Fig. 16 is a circuit diagram illustrating another modification of the conversion circuit; and
Fig. 17 is a circuit diagram illustrating a modification of a storage battery module.

### [Description of Embodiments]

### (First embodiment)

A first embodiment implementing a power supply system that is mounted in a vehicle and supplies power to a load will hereinafter be described with reference to the drawings. For example, the vehicle may be hybrid vehicle or an electric car. The vehicle includes a start-up switch (such as an ignition (IG) switch or a start switch) that starts the vehicle. The vehicle enters an operating state (in operation) by the startup switch being turned on (not shown) and enters a stopped state (stopped) by the startup switch being turned off.

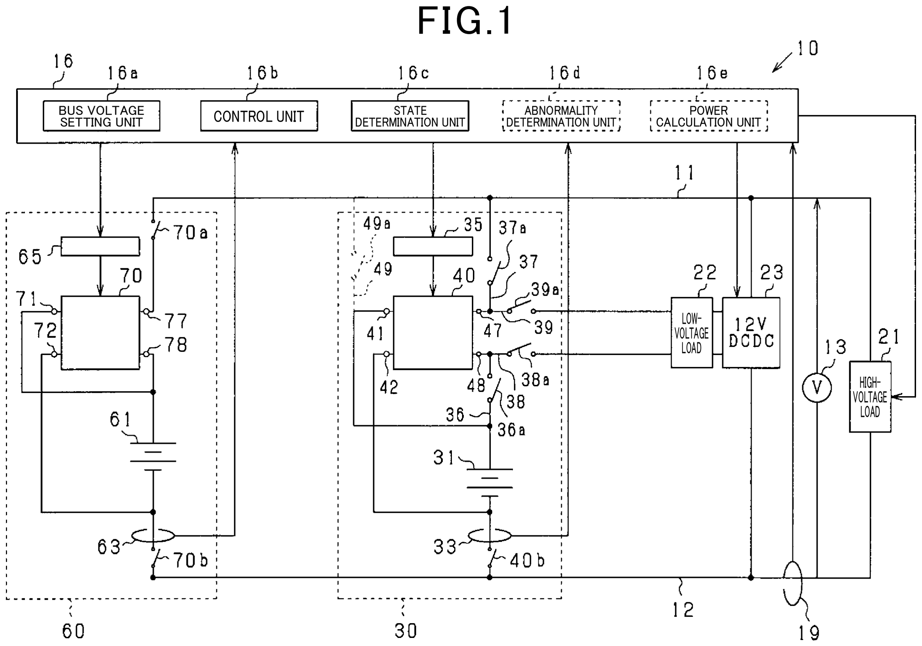

As shown in Fig. 1, a power supply system 10 includes buses 11 and 12 (power supply bus), a first storage battery module 30, a second storage battery module 60, a voltage sensor 13, a current sensor 19, an electronic control unit (ECU) 16, and the like. Here, a positive electrode side (positive side) of the bus is referred to as the bus 11. A negative electrode side (negative side) of the bus is referred to as the bus 12. The bus 12 is grounded.

The first storage battery module 30 (storage battery module), the second storage battery module 60 (storage battery module), a high-voltage load 21, a 12-V direct-current-to-direct-current converter (12VDCDC) 23, and the voltage sensor 13 are connected in parallel to the buses 11 and 12. The storage battery modules 30 and 60 input and output power to and from the buses 11 and 12. The high-voltage load 21 inputs high-voltage power (for example, several hundred volts) from the buses 11 and 12, or inputs and outputs high-voltage power to and from the buses 11 and 12. The voltage sensor 13 detects a bus voltage Vbus that is a voltage across the bus 12 and the bus 11. The current sensor 19 detects a current flowing to the bus 12 (high-voltage load 21).

For example, the high-voltage load 21 may be a combination of an inverter and a motor generator (MG) (a motor unit with an inverter), an electric heater, or the like. The MG (electric power generator) may drive an electric car, for example, using power supplied from the inverter. Alternatively, the MG may perform regenerative power generation using rotational force imparted from the electric car. The inverter converts power between the buses 11 and 12 and the MG. The electric heater may generate heat by using high voltage supplied from the buses 11 and 12, for example, and may warm a vehicle interior or a battery. The high-voltage load 21 may be a single load or a plurality of loads.

For example, the 12VDCDC converter 23 may be a well-known isolated DCDC converter. The 12V DCDC 23 (step-down converter, low-voltage power supply, high-voltage load) is connected in parallel to the buses 11 and 12. A low-voltage load 22 is connected in parallel to the 12V DCDC 23. The 12V DCDC 23 steps down (converts) high-voltage direct-current power supplied from the buses 11 and 12 and supplies a 12-V (low-voltage) direct-current power to the low-voltage load 22, or converts direct-current power supplied from a solar panel or the like and supplies the direct-current power to the buses 11 and 12. The 12V DCDC 23 is controlled by a control unit 16b of the ECU 16.

The low-voltage load 22 is an in-vehicle auxiliary apparatus, a control apparatus, or the like that is driven by being supplied a 12 [V] (low-voltage) power. The low-voltage load 22 can include the ECU 16. Power supply to the low-voltage load 22 from at least either of the 12V DCDC 23 and a first conversion circuit 40 described hereafter is maintained.

The first storage battery module 30 includes a first storage battery 31, a first current sensor 33, a first drive circuit 35, the first conversion circuit 40, a first path 36, a second path 37, a third path 38, a fourth path 39, a first relay 36a, a second relay 37a, a third relay 38a, a fourth relay 39a, a relay 40b, and the like. For example, the relays 36a, 37a, 38a, 39a, and 40b may be configured by semiconductor relays such as field effect transistors (FETs) or insulated-gate bipolar transistors (IGBTs), and may be controlled by the control unit 16b of the ECU 16. The relay 40b disconnects and connects the storage battery module 30 to the bus 12.

For example, the first storage battery 31 (high-voltage battery, main battery, storage battery) may be a high-voltage (such as several hundred volts) secondary battery using a lithium ion battery, a nickel-metal hydride battery, or the like. A type thereof is arbitrary. The first storage battery 31 is typically configured as an assembled battery in which a plurality of unit batteries are connected in series. The first current sensor 33 (current sensor) detects a current flowing to the first storage battery 31. A detection value of the first current sensor 33 is input to the ECU 16 and used to calculate, for example, a charging amount (state-of-charge (SOC)) of the first storage battery 31. The first drive circuit 35 (drive circuit) drives a switching element (described hereafter) included in the first conversion circuit 40 to be turned on and off. The first drive circuit 35 is controlled by the ECU 16.

The first conversion circuit 40 (PPC, conversion circuit) includes a positive electrode terminal 41 and a negative electrode terminal 42 on a primary side (primary-side terminals) that compose a primary-side terminal pair, and a positive electrode terminal 47 and a negative electrode terminal 48 on a secondary side (secondary-side terminals) that compose a secondary-side terminal pair. A negative electrode of the first storage battery 31 is connected to the bus 12. The primary-side positive electrode terminal 41 is connected to a positive electrode of the first storage battery 31, and the primary-side negative electrode terminal 42 is connected to the negative electrode of the first storage battery 31. That is, the positive electrode and the negative electrode of the first storage battery 31 are respectively connected to the primary-side terminal pair 41 and 42 of the first conversion circuit 40.

In addition, the secondary-side negative electrode terminal 48 is connected to the positive electrode of the first storage battery 31 by the first path 36. The first path 36 (series path) connects the secondary-side negative electrode terminal 48 (secondary-side terminal pair 47 and 48) of the first conversion circuit 40 to the first storage battery 31 in series. The first relay 36a that disconnects and connects the first path 36 is provided on the first path 36. The secondary-side positive electrode terminal 47 is connected to the bus 11 by the second path 37. The second path 37 (bus connection path) connects the secondary-side positive electrode terminal 47 that, of the secondary-side terminal pair 47 and 48 of the first conversion circuit 40, is on a side opposite the first storage battery 31 to the bus 11. The second relay 37a that disconnects and connects the second path 37 is provided on the second path 37. That is, the secondary-side terminal pair 47 and 48 of the first conversion circuit 40 are connectable in series to and disconnected from the first storage battery 31 by the first path 36, the second path 37, the first relay 36a, and the second relay 37a.

Furthermore, the secondary-side negative electrode terminal is connected to a negative electrode side of the low-voltage load 22 by the third path 38. The third relay 38a that disconnects and connects the third path 38 is provided on the third path 38 (negative-electrode-side path). The secondary-side positive electrode terminal 47 is connected to a positive electrode side of the low-voltage load 22 by the fourth path 39. The fourth relay 39a that disconnects and connects the fourth path 39 is provided on the fourth path 39 (positive-electrode-side path). That is, the secondary-side terminal pair 48 and 47 of the first conversion circuit 40 are connectable in series to and disconnected from the low-voltage load 22 by the third path 38, the fourth path 39, the third relay 38a, and the fourth relay 39a.

The first conversion circuit 40 converts power input from the first storage battery 31 to the primary-side terminal pair 41 and 42 and outputs the converted power from the secondary-side terminal pair 47 and 48. Here, the first conversion circuit 40 may be a bidirectional conversion circuit also capable of converting power inputted to the secondary-side terminal pair 47 and 48 and outputting the converted power from the primary-side terminal pair 41 and 42.

The second storage battery module 60 has a configuration similar to that of the first storage battery module 30, aside from not including the third path 38, the fourth path 39, and the relays 36a, 37a, 38a, and 39a. The second storage battery module 60 includes a second storage battery 61 (high-voltage battery, main battery, storage battery), a second current sensor 63 (current sensor), a second drive circuit 65 (drive circuit), a second conversion circuit 70, relays 70a and 70b, and the like. The second conversion circuit 70 (conversion circuit) has a configuration similar to that of the first conversion circuit 40. The second conversion circuit 70 includes a positive electrode terminal 71 and a negative electrode terminal 72 on a primary side (primary-side terminals) that compose a primary-side terminal pair, and a positive electrode terminal 77 and a negative electrode terminal 78 on a secondary side (secondary-side terminals) that compose a secondary-side terminal pair. A manner of connection thereof is also similar to that of the first storage battery module 30. Therefore, the description of the first storage battery module 30, above, is applicable. The relays 70a and 70b respectively disconnect and connect the storage battery module 60 to the buses 11 and 12. Although the first storage battery module 30 and the second storage battery module 60 have configurations providing similar functions, ratings and withstand voltages of the respective configurations may be different therebetween.

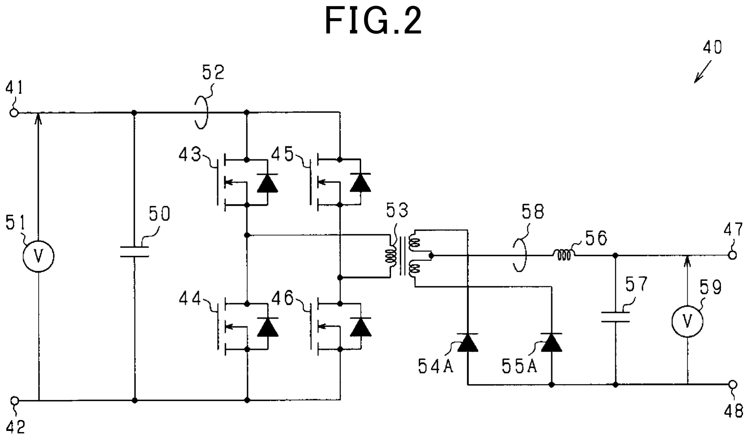

Fig. 2 shows an example of the first conversion circuit 40. The first conversion circuit 40 is a well-known center-tapped isolated DCDC converter. The first conversion circuit 40 includes switching elements 43 to 46, diodes 54A and 55A, smoothing capacitors 50 and 57, a transformer 53, a reactor 56, voltage sensors 51 and 59, current sensors 52 and 58, and the like. For example, the switching elements 43 to 46 may be FETs or IGBTs. The switching elements 43 to 46 configure a full-bridge circuit. A connection point between the switching element 43 and the switching element 44 and a connection point between the switching element 45 and the switching element 46 are respectively connected to both ends of a primary-side coil of the transformer 53. The diodes 54A and 55A are provided between both end portions of a secondary-side coil of the transformer 53 and the negative electrode terminal 48, and respectively connected thereto. Anodes of the diodes 54A and 55A are connected to the negative electrode terminal 48, and cathodes are connected to both end portions of the secondary-side coil of the transformer 53. The voltage sensor 51 detects a voltage across the negative electrode terminal 42 and the positive electrode terminal 41 on the primary side, that is, an output voltage Vb of the first storage battery 31. The current sensor 52 detects an input current Ii that is a current input to a primary-side circuit. The voltage sensor 59 detects a voltage across the negative electrode terminal 48 and the positive electrode terminal 47 on the secondary side, that is, an output voltage Vo of the first conversion circuit 40. The current sensor 58 detects a current flowing to the reactor 56, that is, an output current Io of the first conversion circuit 40. Detection values of the voltage sensors 51 and 59 and the current sensors 52 and 58 are input to the ECU 16.

For example, the ECU 16 (control apparatus) may be configured as a microcomputer (computer) including a central processing unit (CPU), a read-only memory (ROM), a random access memory (RAM), an input/output interface, and the like. The ECU 16 controls states of relays 15 and 17, a driving state of the 12V DCDC 23, states of the relays 36a, 37a, 38a, 39a, 40b, 70a, and 70b, and a state of the high-voltage load 21. In addition, the ECU 16 implements functions of a bus voltage setting unit 16a, the control unit 16b, a state determination unit 16c, an abnormality determination unit 16d, and a power calculation unit 16e by running a control program applied to the power supply system 10.

The bus voltage setting unit 16a sets a bus voltage request value Vbus* that is a voltage requested to be supplied from the buses 11 and 12 to the high-voltage load 21. The bus voltage setting unit 16a sets the bus voltage request value Vbus* based on the state of the high-voltage load 21.

The control unit 16b controls each of output voltages Vo1 and Vo2 of the conversion circuits 40 and 70 such that output voltages Vm1 and Vm2 of the storage battery modules 30 and 60 each become the bus voltage request value Vbus* (become closer to the bus voltage request value Vbus*). For example, the control unit 16b may control the switching elements 43 to 46 based on the detection values of the voltage sensors 51 and 59 and the current sensors 52 and 58, thereby controlling the first output voltage Vo1 of the first conversion circuit 40 to be a first output voltage request value Vo1*. Specifically, the first output voltage request value Vo1* is set to a voltage obtained by subtracting a first output voltage Vb1 of the first storage battery 31 from the bus voltage request value Vbus* (Vo1* = Vbus*-Vb1). In a similar manner, the control unit 16b controls a second output voltage Vo2 of the second conversion circuit 70 to become a second output voltage request value Vo2*. Specifically, the second output voltage request value Vo2* is set to a voltage obtained by subtracting a second output voltage Vb2 of the second storage battery 61 from the bus voltage request value Vbus* (Vo2* = Vbus*-Vb2).

Here, the discloser of the present application has focused on a possibility of reducing the number of redundant power supplies if the first conversion circuit 40 is able to be used as a power supply for the low-voltage load 22. That is, as a result of the first conversion circuit 40 used to adjust the voltage difference between the first storage battery 31 and the second storage battery 61 being used as a redundant power supply for the 12V DCDC 23, providing a redundant power supply becomes unnecessary. Specifically, the control unit 16b executes a voltage adjustment mode in which power is supplied from the secondary-side terminal pair 47 and 48 of the first conversion circuit 40 to the buses 11 and 12, and a 12V-DCDC mode (low-voltage power supply mode) in which power is supplied from the secondary-side terminal pair 47 and 48 of the first conversion circuit 40 to the low-voltage load 22. The control unit 16b controls the output voltage Vo of the first conversion circuit 40 based on the voltage detected by the voltage sensor 59 (secondary-side voltage sensor) during execution of the 12V-DCDC mode. Specifically, the control unit 16b controls the switching elements 43 to 46 based on the detection values of the voltage sensors 51 and 59 and the current sensors 52 and 58 such that the voltage detected by the voltage sensor 59 may become, for example, 12 [V] (the voltage requested by the low-voltage load 22).

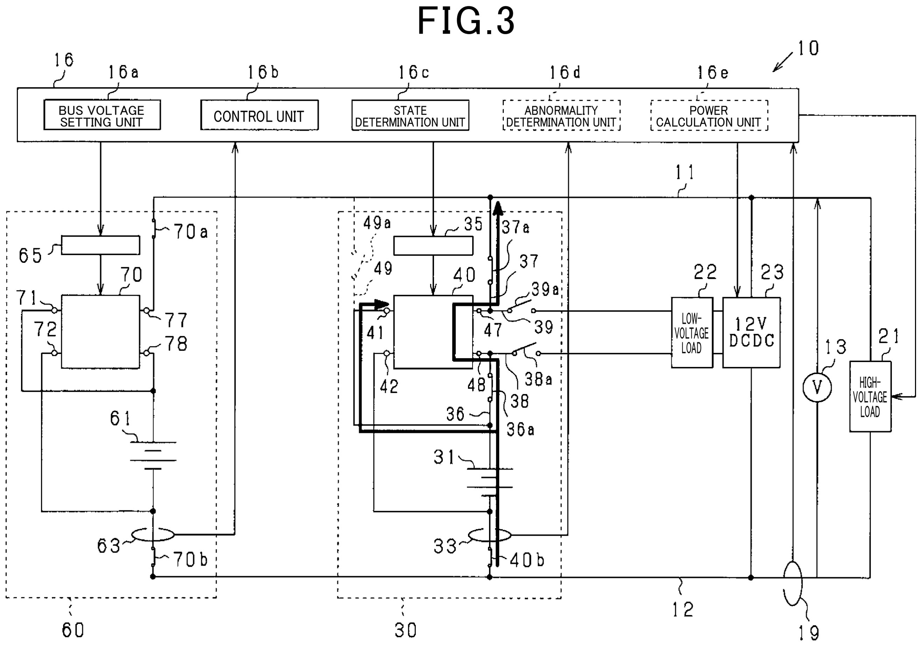

Fig. 3 is a circuit diagram showing relay states and currents in the voltage adjustment mode. When executing the voltage adjustment mode, the control unit 16b connects the first relay 36a and the second relay 37a, and disconnects the third relay 38a and the fourth relay 39a. As a result, a high-voltage path supplying a high voltage to the buses 11 and 12 and a low-voltage path supplying a low voltage to the low-voltage load 22 are isolated from each other. In the voltage adjustment mode, a first output voltage Vm1 of the first storage battery module 30 is adjusted to a voltage obtained by the first output voltage Vo1 of the first conversion circuit 40 being added to the first output voltage Vb1 of the first storage battery 31 (Vm1 = Vb1+Vo1), and power is supplied from the first storage battery module 30 to the buses 11 and 12. At this time, power is not supplied to the low-voltage load 22 from the first conversion circuit 40. Here, the high-voltage path and the low-voltage path are isolated from each other inside the 12V DCDC 23, as well.

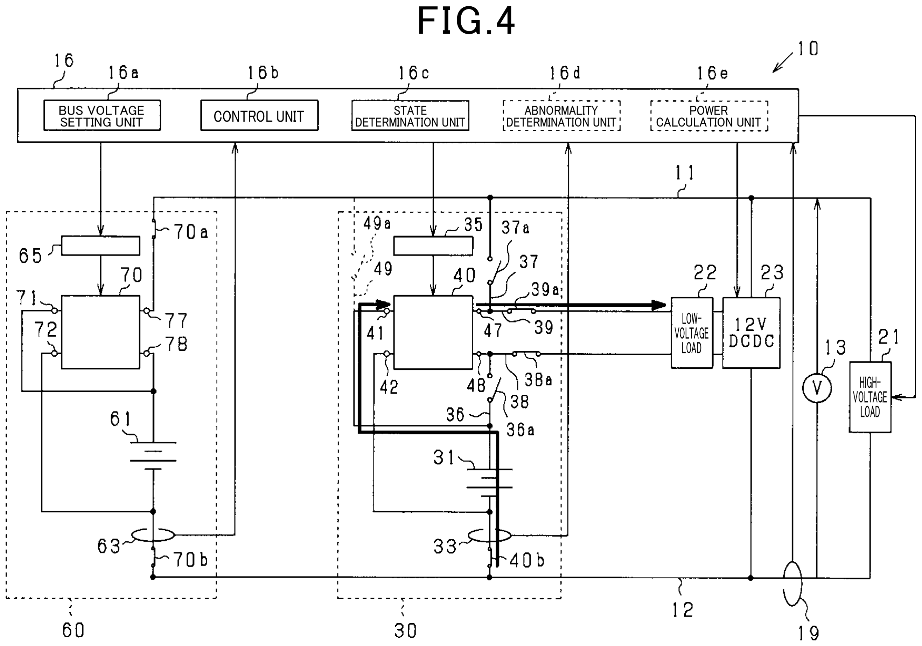

Fig. 4 is a circuit diagram showing relay states and currents in 12V-DCDC mode. When executing the 12V-DCDC mode, the control unit 16b disconnects the first relay 36a and the second relay 37a, and connects the third relay 38a and the fourth relay 39a. As a result, the high-voltage path supplying a high voltage to the buses 11 and 12 and the low-voltage path supplying a low voltage to the low-voltage load 22 are isolated from each other. In the 12V-DCDC mode, power of the first output voltage Vo1 is supplied from the secondary-side terminal pair 47 and 48 of the first conversion circuit 40 to the low-voltage load 22. At this time, power is not supplied to the buses 11 and 12 from the first storage battery module 30. Here, the high-voltage path and the low-voltage path are insulated from each other inside the 12V DCDC 23, as well.

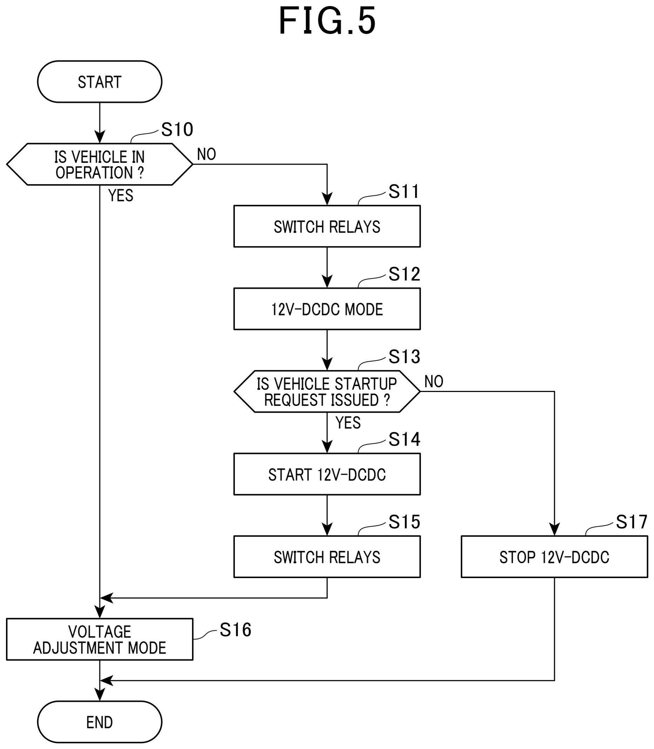

Fig. 5 is a flowchart showing steps for mode switching according to the present embodiment. This series of processes is repeatedly performed by the ECU 16 at predetermined intervals.

First, whether the vehicle is in operation is determined (S10). Specifically, the vehicle is determined to be in operation when a state of the startup switch of the vehicle is input and the startup switch is on. The vehicle is determined not to be in operation (stopped) when the startup switch is off. When the vehicle is determined not to be in operation in the determination (NO at S10), the first relay 36a and the second relay 37a are disconnected, and then the third relay 38a and the fourth relay 39a are connected (S11). Subsequently, the 12V-DCDC mode is executed (S12). Here, the process at S10 corresponds to a process performed by the state determination unit 16c. The vehicle being in operation corresponds to a mode in which the storage batteries 31 and 61 are connected in parallel to the buses 11 and 12 and charged/discharged. The vehicle being stopped corresponds to a mode in which the storage batteries 31 and 61 are not charged/discharged.

Next, whether a startup request for the vehicle is issued is determined (S13). Specifically, the startup request for the vehicle is determined to be issued when the start switch of the vehicle is turned on from off. The startup request is determined not to be issued when the startup switch of the vehicle remains off. When the startup request for the vehicle is determined to be issued in the determination (YES at S13), the 12V DCDC 23 is started (S14). That is, driving of the 12V DCDC 23 is started, and power is supplied from the 12V DCDC 23 to the low-voltage load 22.

Next, the third relay 38a and the fourth relay 39a are disconnected, and then the first relay 36a and the second relay 37a are connected (S15). Subsequently, the voltage adjustment mode is executed (S16), and this series of processes is temporarily ended (END). That is, after the 12V DCDC 23 is started, switching from the 12V-DCDC mode to the voltage adjustment mode is performed. When the vehicle is determined to be in operation in the determination at S10 (YES at S10), the voltage adjustment mode is executed (S16), and this series of processes is temporarily ended (END). That is, the voltage adjustment mode is continued.

In addition, when the startup request for the vehicle is determined not to be issued in the determination at S13 (NO at S13), the 12V DCDC 23 is stopped (S17). That is, after switching from the voltage adjustment mode to the 12V-DCDC mode is performed (after the 12V-DCDC mode is executed), the 12V DCDC 23 is stopped. Subsequently, this series of processes is temporarily ended (END).

The present embodiment described in detail above provides following advantages.

The positive electrode and the negative electrode of the first storage battery 31 are respectively connected to the primary-side terminal pair 41 and 42 of the first conversion circuit 40. The secondary-side terminal pair 47 and 48 of the first conversion circuit 40 are connectable in series to the first storage battery 31. Therefore, in a state in which the secondary-side terminal pair 47 and 48 of the first conversion circuit 40 is connected in series to the first storage battery 31, the first output voltage Vo1 of the first conversion circuit 40 can be added to the first output voltage Vb1 of the first storage battery 31, and the first conversion circuit 40 can adjust the voltage difference between the storage batteries 31 and 61. At this time, the first output voltage Vo1 requested of the first conversion circuit 40 can be reduced compared to a configuration in which the first storage battery 31 is connected in parallel to the secondary-side terminal pair 47 and 48 of the first conversion circuit 40. Therefore, a rated voltage of the first conversion circuit 40 can be reduced, and a rated capacity of the first conversion circuit 40 can be reduced. Consequently, the first conversion circuit 40 can be made smaller in size.

The secondary-side terminal pair 47 and 48 of the first conversion circuit 40 are connectable in parallel to the low-voltage load 22. Therefore, in a state in which the secondary-side terminal pair 47 and 48 of the first conversion circuit 40 is connected in parallel to the low-voltage load 22, power can be supplied from the secondary-side terminal pair 47 and 48 of the first conversion circuit 40 to the low-voltage load 22. Here, because the first output voltage Vo1 requested of the first conversion circuit 40 during adjustment of the voltage difference between the storage batteries 31 and 61 is low, the first conversion circuit 40 is suitable for supplying power to the low-voltage load 22. Consequently, the first conversion circuit 40 can be used as a power supply for the low-voltage load 22, and the number of redundant power supplies can be reduced.

In a state in which the first relay 36a and the second relay 37a are connected, the first output voltage Vo1 of the first conversion circuit 40 can be added to the first output voltage Vb1 of the first storage battery 31. The first conversion circuit 40 can adjust the voltage difference between the storage batteries 31 and 61. At this time, as a result of the third relay 38a and the fourth relay 39a being disconnected, the high-voltage path supplying a high voltage to the buses 11 and 12 and the low-voltage path supplying a low voltage to the low-voltage load 22 can be isolated from each other. In addition, in a state in which the third relay 38a and the fourth relay 39a are connected, power can be supplied from the secondary-side terminal pair 47 and 48 of the first conversion circuit 40 to the low-voltage load 22. At this time, as a result of the third relay 38a and the fourth relay 39a being disconnected, the high-voltage path and the low-voltage path can be isolated from each other.

When executing the voltage adjustment mode in which power is supplied from the secondary-side terminal pair 47 and 48 of the first conversion circuit 40 to the buses 11 and 12, the control unit 16b connects the first relay 36a and the second relay 37a, and disconnects the third relay 38a and the fourth relay 39a. Therefore, in the voltage adjustment mode, the first conversion circuit 40 can adjust the voltage difference between the storage batteries 31 and 61 while the high-voltage path and the low-voltage path are isolated from each other. In addition, when executing the 12V-DCDC mode in which power is supplied from the secondary-side terminal pair 47 and 48 of the first conversion circuit 40 to the low-voltage load 22, the control unit 16b disconnects the first relay 36a and the second relay 37a, and connects the third relay 38a and the fourth relay 39a. Therefore, in the 12V-DCDC mode, power can be supplied from the secondary-side terminal pair 47 and 48 of the first conversion circuit 40 to the low-voltage load 22 while the high-voltage path and the low-voltage path are isolated from each other.

When executing the voltage adjustment mode, the control unit 16b disconnects the third relay 38a and the fourth relay 39a, and then connects the first relay 36a and the second relay 37a. Therefore, the voltage adjustment mode can be executed after the high-voltage path and the low-voltage path are isolated from each other with certainty. In addition, when executing the 12V-DCDC mode, the control unit 16b disconnects the first relay 36a and the second relay 37a, and then connects the third relay 38a and the fourth relay 39a. Therefore, the 12V-DCDC mode can be executed after the high-voltage path and the low-voltage path are isolated from each other with certainty.

The 12VDCDC converter 23 is connected to the buses 11 and 12. The12V DCDC converter 23 steps down the high-voltage power input from the buses 11 and 12 to 12 [V] and outputs the power to the low-voltage load 22. Therefore, power can be supplied to the low-voltage load 22 from the first conversion circuit 40 executing the 12V-DCDC mode and the 12V DCDC 23. Here, the control unit 16b switches from the 12V-DCDC mode to the voltage adjustment mode after starting the 12V DCDC 23. Therefore, transition from the 12V-DCDC mode to the voltage adjustment mode can be made without the power supply to the low-voltage load 22 being interrupted. In addition, the control unit 16b stops the 12V DCDC 23 after switching from the voltage adjustment mode to the 12V-DCDC mode. Therefore, the 12V DCDC 23 can be stopped without the power supply to the low-voltage load 22 being interrupted. If no issues arise by the power supply to the low-voltage load 22 being temporarily interrupted, the voltage adjustment mode may be executed before the 12V DCDC 23 is started, or the 12V DCDC 23 may be stopped before the 12V-DCDC mode is executed.

When the state determination unit 16c determines that the vehicle is in operation, the control unit 16b executes the voltage adjustment mode in which power is supplied from the secondary-side terminal pair 47 and 48 of the first conversion circuit 40 to the buses 11 and 12. Therefore, while the vehicle is in operation, as a result of the voltage adjustment mode being executed, power can be supplied from the first storage battery 31 to the buses 11 and 12 while the first conversion circuit 40 adjusts the voltage difference between the storage batteries 31 and 61. In addition, when the state determination unit 16c determines that the vehicle is stopped, the control unit 16b executes the 12V-DCDC mode in which power is supplied from the secondary-side terminal pair 47 and 48 of the first conversion circuit 40 to the low-voltage load 22. Therefore, while the vehicle is stopped, as a result of the 12V-DCDC mode being executed, power can be supplied from the first conversion circuit 40 to the low-voltage load 22. Consequently, a dedicated low-voltage power supply for supplying power to the low-voltage load 22 while the vehicle is stopped is not required to be provided.

The control unit 16b can use the voltage detected by the voltage sensor 59 both when executing the voltage adjustment mod and when executing the 12V-DCDC mode.

The above-described working effects can be achieved by the ECU 16 (computer) running a control program applied to the power supply system 10.

### (Second embodiment)

A second embodiment will be described below, focusing on the differences from the first embodiment. Here, sections identical to those according to the first embodiment are given the same reference numbers, and therefore, descriptions thereof are applicable.

According to the present embodiment, the ECU 16 implements functions of the abnormality determination unit 16d that determines whether a low-voltage power supply is abnormal by running a control program. For example, the low-voltage power supply may be the 12V DCDC 23 in Fig. 1 and is capable of being separated from the low-voltage load 22. Here, the low-voltage power supply may be, for example, an auxiliary battery (low-voltage battery) that supplies a voltage of 12 [V].

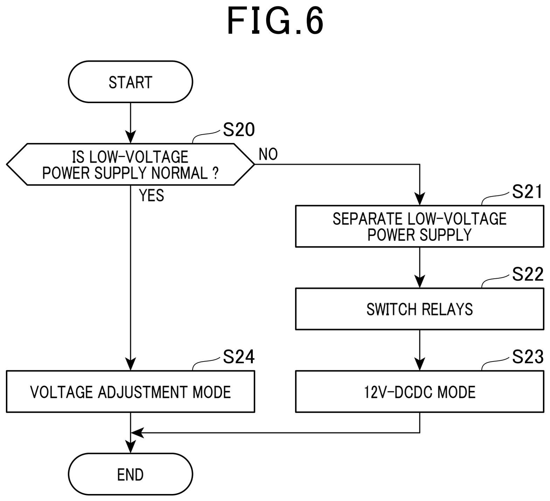

Fig. 6 is a flowchart showing steps for mode switching according to the present embodiment. This series of processes is repeatedly performed by the ECU 16 at predetermined intervals.

First, whether the low-voltage power supply is normal is determined (S10). For example, the low-voltage power supply may be determined to be normal (not abnormal) when the 12V DCDC 23 has not failed and the 12V DCDC 23 is not shorted to ground. Meanwhile, the low-voltage power supply is determined not to be normal (abnormal) when the 12V DCDC 23 has failed or the 12V DCDC 23 is shorted to ground. When the low-voltage power supply is determined not to be normal in the determination (NO at S20), the low-voltage power supply is separated from the low-voltage load 22 (S21). The first relay 36a and the second relay 37a are disconnected, and the third relay 38a and the fourth relay 39a are connected (S22). Subsequently, the 12V-DCDC mode is executed (S23), and this series of processes is temporarily ended (END). Here, the process at S20 corresponds to a process performed by the abnormality determination unit 16d.

Meanwhile, when the low-voltage power supply is determined to be normal in the determination at S20 (YES at S20), the voltage adjustment mode is executed (S24), and this series of processes is temporarily ended (END). When the voltage adjustment mode is executed, the first relay 36a and the second relay 37a are connected, and the third relay 38a and the fourth relay 39a are disconnected.

As a result of the above-described configuration, when the abnormality determination unit 16d determines that the 12V DCDC 23 is normal (not abnormal), the control unit 16b executes the voltage adjustment mode in which power is supplied from the secondary-side terminal pair 47 and 48 of the first conversion circuit 40 to the buses 11 and 12. Therefore, when the 12V DCDC 23 is normal, as a result of the voltage adjustment mode being executed, power can be supplied from the first storage battery 31 to the buses 11 and 12 while the first conversion circuit 40 adjusts the voltage difference between the storage batteries 31 and 61. In addition, when the abnormality determination unit 16d determines that the 12V DCDC 23 is not normal (abnormal), the control unit 16b executes the 12V-DCDC mode in which power is supplied from the secondary-side terminal pair 47 and 48 of the first conversion circuit 40 to the low-voltage load 22. Therefore, when the 12V DCDC 23 is not normal, as a result of the 12V-DCDC mode being executed, power can be supplied from the first conversion circuit 40 to the low-voltage load 22. Consequently, the number of redundant power supplies can be reduced.

A third embodiment will be described below, focusing on the differences from the first embodiment. Here, sections identical to those according to the first embodiment are given the same reference numbers, and therefore, descriptions thereof are applicable.

According to the present embodiment, the ECU 16 implements functions of the power calculation unit 16e that calculates a high-voltage power request value that is power requested by the high-voltage load 21 and a low-voltage power request value that is power requested by the low-voltage load 22 by running a control program. The power calculation unit 16e calculates the high-voltage power request value based on the state of the high-voltage load 21 and calculates the low-voltage power request value based on the state of the low-voltage load 22.

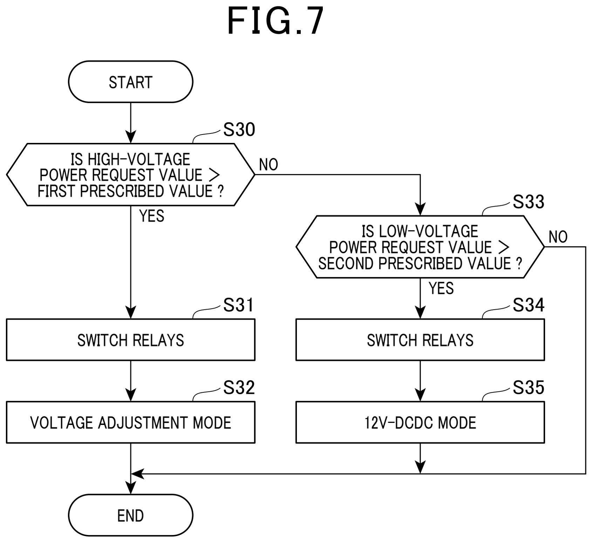

Fig. 7 is a flowchart showing steps for mode switching according to the present embodiment. This series of processes is repeatedly performed by the ECU 16 at predetermined intervals.

First, whether the high-voltage power request value is greater than a first prescribed value is determined (S30). For example, the first prescribed value may be set to a value allowing determination that a difference between maximum power that can be supplied by the second storage battery module 60 and the high-voltage power request value is small (smaller than a predetermined difference). When the high-voltage power request value is determined to be greater than the first prescribed value in the determination (YES at S30), the third relay 38a and the fourth relay 39a are disconnected, and then the first relay 36a and the second relay 37a are connected (S31). Subsequently, the voltage adjustment mode is executed (S32), and this series of processes is temporarily ended (END). Here, the process at S30 corresponds to a process performed by the power calculation unit 16e.

Meanwhile, when the high-voltage power request value is determined not to be greater than the first prescribed value in the determination at S30 (NO at S30), whether the low-voltage power request value is greater than a second prescribed value is determined (S33). For example, the second prescribed value may be set to a value allowing determination that a difference between maximum power that can be supplied by the 12V DCDC 23 and the low-voltage power request value is small (smaller than a predetermined difference). When the low-voltage power request value is determined to be greater than the second prescribed value in the determination (YES at S33), the first relay 36a and the second relay 37a are disconnected, and then the third relay 38a and the fourth relay 39a are connected (S34). Subsequently, the 12V-DCDC mode is executed (S35), and this series of processes is temporarily ended (END). In addition, when the low-voltage power request value is determined not to be greater than the second prescribed value in the determination at S33 (NO at S33), this series of processes is temporarily ended (END). Here, the process at S33 corresponds to a process performed by the power calculation unit 16e.

According to the above-described configuration, the control unit 16b executes the voltage adjustment mode when the high-voltage power request value calculated by the power calculation unit 16e is greater than the first prescribed value. Therefore, when the high-voltage power request value is greater than the first prescribed value, as a result of the voltage adjustment mode being executed, power can be supplied from the first storage battery 31 to the buses 11 and 12 while the first conversion circuit 40 adjusts the voltage difference between the storage batteries 31 and 61. In addition, the control unit 16b executes the 12V-DCDC mode when the low-voltage power request value calculated by the power calculation unit 16e is greater than the second prescribed value. Therefore, when the low-voltage power request value is greater than the second prescribed value, as a result of the 12V-DCDC mode being executed, power can be supplied from the first conversion circuit 40 to the low-voltage load 22. Consequently, switching between the voltage regulation mode and the 12V-DCDC mode based on the high-voltage power request value and the low-voltage power request value is possible.

Furthermore, instead of the process at S30, whether the low-voltage power request value is less than the second prescribed value may be determined. Then, when the low-voltage power request value is determined to be less than the second prescribed value, the process may proceed to S31. In addition, instead of the process at S33, whether the high-voltage power request value is less than the first prescribed value may be determined. Then, when the high-voltage power request value is determined to be less than the first prescribed value, the process may proceed to S34. As a result of such a configuration, when the low-voltage power request value is less than the second prescribed value, as a result of the voltage adjustment mode being executed, power can be supplied from the first storage battery 31 to the buses 11 and 12 while the first conversion circuit 40 adjusts the voltage difference between the storage batteries 31 and 61. In addition, when the high-voltage power request value is less than the first prescribed value, as a result of the 12V-DCDC mode being executed, power can be supplied from the first conversion circuit 40 to the low-voltage load 22. Therefore, switching between the voltage adjustment mode and the 12V-DCDC mode based on the high-voltage power request value and the low-voltage power request value is possible.

### (Fourth embodiment)

A fourth embodiment will be described below, focusing on the differences from the first embodiment. Here, sections identical to those according to the first embodiment and the third embodiment are given the same reference numbers, and therefore, descriptions thereof are applicable. According to the present embodiment as well, the ECU 16 implements the functions of the power calculation unit 16e by running a control program.

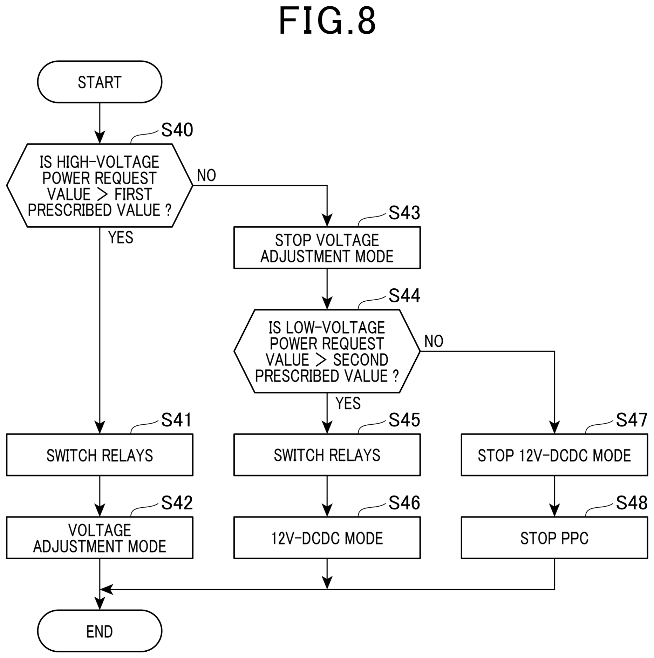

Fig. 8 is a flowchart showing steps for mode switching according to the present embodiment. This series of processes is repeatedly performed by the ECU 16 at predetermined intervals.

Processes at S40 to S42 are identical to the processes at S30 to S32 in Fig. 7. When the high-voltage power request value is determined not to be greater than the first prescribed value in the determination at S40 (NO at S40), the voltage adjustment mode is stopped (S43). That is, power supply from the first storage battery 31 to the buses 11 and 12 is stopped while the first conversion circuit 40 adjusts the voltage difference between the storage batteries 31 and 61.

Processes at S44 to S46 are identical to the processes at S33 to S35 in Fig. 7. Here, in the process at S46, the mode is switched to the 12V-DCDC mode from a state in which the voltage adjustment mode is stopped.

When the low-voltage power request value is determined not to be greater than the second prescribed value in the determination at S44 (NO at S44), the 12V-DCDC mode is stopped (S47). That is, power supply from the first conversion circuit 40 to the low-voltage load 22 is stopped. Then, the first conversion circuit 40 is stopped (48). At this time, the relays 36a, 37a, 38a, and 39a may be disconnected. Subsequently, this series of processes is temporarily ended (END). As a result of such a configuration, power consumption of the power supply system 10 can be reduced.

In addition, according to the third embodiment and the fourth embodiment, the power supply system 10 may include a plurality of first storage battery modules 30 capable of executing the voltage adjustment mode and the 12V-DCDC mode. The first storage battery module 30 that executes the voltage adjustment mode may then be increased each time the high-voltage power request value increases by a first request value. For example, the first request value may be a value corresponding to power that can be supplied by a single first storage battery 31 (first storage battery module 30) in the voltage adjustment mode. Meanwhile, the first storage battery module 30 that executes the voltage adjustment mode maybe decreased each time the high-voltage power request value decreases by the first request value. Furthermore, the first storage battery module 30 that executes the 12V-DCDC mode may be increased each time the low-voltage power request value increases by a second request value. For example, the second request value may be a value corresponding to power that can be supplied by a single first storage battery 31 (first storage battery module 30) in the 12V-DCDC mode. Meanwhile, the first storage battery module 30 that executes the 12V-DCDC mode maybe decreased each time the low-voltage power request value decreases by the second request value. Furthermore, the first storage battery module 30 that does not execute either of the voltage regulation mode and the 12V-DCDC mode may be stopped. At this time, the relays 36a, 37a, 38a, and 39a may be disconnected.

The first to fourth embodiments can also be modified as follows. Here, sections identical to those according to the first to fourth embodiments are given the same reference numbers, and therefore, descriptions thereof are applicable.

When the mode is switched from the 12V-DCDC mode to the voltage adjustment mode, the third relay 38a and the fourth relay 39a may be disconnected and, at the same time, the first relay 36a and the second relay 37a may be connected. In addition, when the mode is switched from the 12V-DCDC mode to the voltage adjustment mode, the first relay 36a and the second relay 37a may be connected before the third relay 38a and the fourth relay 39a are disconnected. In this case, a state in which the high-voltage path and the low-voltage path are not isolated from each other occurs. However, a short-circuit current does not flow between the high-voltage path and the low-voltage path.

When the mode is switched from the voltage adjustment mode to the 12V-DCDC mode, the first relay 36a and the second relay 37a may be disconnected and, at the same time, the third relay 38a and the fourth relay 39a may be connected. In addition, when the mode is switched from the voltage adjustment mode to the 12V-DCDC mode, the third relay 38a and the fourth relay 39a may be connected before the first relay 36a and the second relay 37a are disconnected. In this case, a state in which the high-voltage path and the low-voltage path are not isolated from each other occurs. However, a short-circuit current does not flow between the high-voltage path and the low-voltage path.

In the voltage adjustment mode, when the first output voltage Vo1 of the first conversion circuit 40 is approximately 12 [V] (substantially equal to the voltage requested by the low-voltage load 22), the relays 36a, 37a, 38a, and 39a can be connected and the 12V-DCDC mode can be simultaneously executed.

As shown in the first storage battery module 30 in Fig. 1 using broken lines, the first storage battery module 30 may include a predetermined path 49 and a predetermined relay 49a. The predetermined path 49 connects the positive electrode terminal 41 on the primary side of the first conversion circuit 40 to the bus 11. That is, the predetermined path 49 connects the primary-side positive electrode terminal 41 (primary-side terminal) that, of the primary-side terminal pair 41 and 42 of the first conversion circuit 40, is connected between the first storage battery 31 and the secondary-side negative electrode terminal 48 (secondary-side terminal pair), to the bus 11 (power supply bus). For example, the predetermined relay 49a may be configured by an FET or an IGBT, and may disconnect and connect the predetermined path 49. As a result of such a configuration, power can be directly supplied from the first storage battery 31 to the buses 11 and 12 by the predetermined path 49 being connected by the predetermined relay 49a. Therefore, for example, in a state in which the first relay 36a and the second relay 37a are disconnected and the third relay 38a and the fourth relay 39a are connected, power can be supplied to the buses 11 and 12 and the low-voltage load 22 while the high-voltage path and the low-voltage path are isolated from each other.

In the second storage battery module 60 that does not execute the 12V-DCDC mode, the voltage sensor 59 (secondary-side voltage sensor) of the second conversion circuit 70 can be omitted. In this case, in the voltage adjustment mode, the second output voltage Vo2 of the second conversion circuit 70 can be calculated by the second output voltage Vb2 of the second storage battery 61 detected by the voltage sensor 51 being subtracted from the bus voltage Vbus detected by the voltage sensor 13 (Vo2 = Vbus-Vb2).

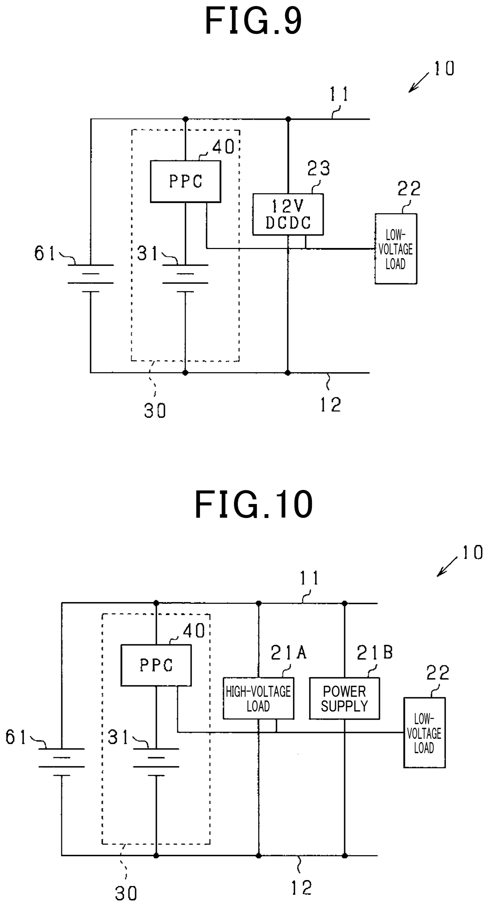

Fig. 9 is a circuit diagram of a modification of the power supply system. Here, the first conversion circuit 40 is denoted as PPC. Connections of the primary-side terminal pair 41 and 42 and the secondary-side terminal pair 47 and 48 are shown in a simplified manner. Here, these is similarly shown in subsequent drawings showing the power supply system 10. The power supply system 10 may include only the second storage battery 61 instead of the second storage battery module 60. That is, the second conversion circuit 70 may not be connected in series to the second storage battery 61. As a result of such a configuration as well, the first conversion circuit 40 can adjust the voltage difference between the storage batteries 31 and 61.

As shown in Fig. 10, a high-voltage load 21A and a power supply 21B may be connected in parallel to the buses 11 and 12. For example, the high-voltage load 21A may be a low-voltage power supply similar to the 12V DCDC 23. As a result of such a configuration, even in a case in which any of the first storage battery 31, the first conversion circuit 40, the second storage battery 61, and the power supply 21B has failed, power can be supplied to the high-voltage load 21A from at least one of the first storage battery 31, the first conversion circuit 40, the second storage battery 61, and the power supply 21B. In addition, the first storage battery 31 and the second storage battery 61 can be charged by the power supply 21B.

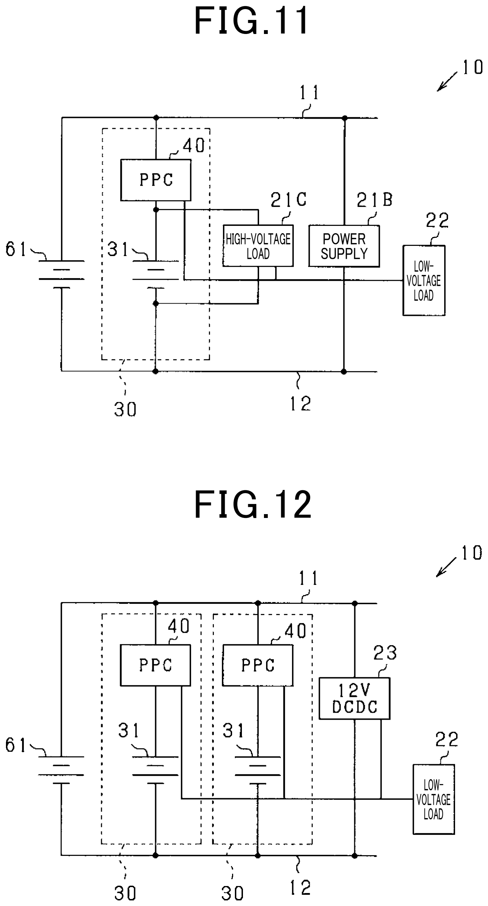

As shown in Fig. 11, a high-voltage load 21C may be connected in parallel to the first storage battery 31 to which the secondary-side terminal pair 47 and 48 (not shown) of the first conversion circuit 40 are connectable in series. As a result of such a configuration, the charging amount of the first storage battery 31 can be reduced by power supply from the first storage battery 31 to the high-voltage load 21C, and the first output voltage Vb1 of the first storage battery 31 can be reduced. That is, the first output voltage Vb1 of the first storage battery 31 can be reduced relative to the second output voltage Vb2 of the second storage battery 61 to which the second conversion circuit 70 is not connected in series (the secondary-side terminal pair 77 and 78 of the second conversion circuit 70 is not able to be connected in series). Therefore, control in which the first output voltage Vo1 of the first conversion circuit 40 is added to the first output voltage Vb1 of the first storage battery 31 is facilitated. The first conversion circuit 40 can more easily adjust the voltage difference between the storage batteries 31 and 61.

In addition, the power supply 21B (charging apparatus) is connected to the second storage battery 61 to which the second conversion circuit 70 is not connected. Therefore, as a result of the second storage battery 61 being charged by the power supply 21B, a charging amount of the second storage battery 61 can be increased, and the second output voltage Vb2 of the second storage battery 61 can be increased. In this case as well, the first output voltage Vb1 of the first storage battery 31 can be reduced relative to the second output voltage Vb2 of the second storage battery 61. Therefore, control in which the first output voltage Vo1 of the first conversion circuit 40 is added to the first output voltage Vb1 of the first storage battery 31 is facilitated. The first conversion circuit 40 can more easily adjust the voltage difference between the storage batteries 31 and 61.

As shown in Fig. 12, the power supply system 10 may include a plurality of first storage battery modules 30. That is, the secondary-side terminal pairs 47 and 48 (not shown) of the plurality of first conversion circuits 40 may be able to be connected in parallel to the low-voltage load 22.

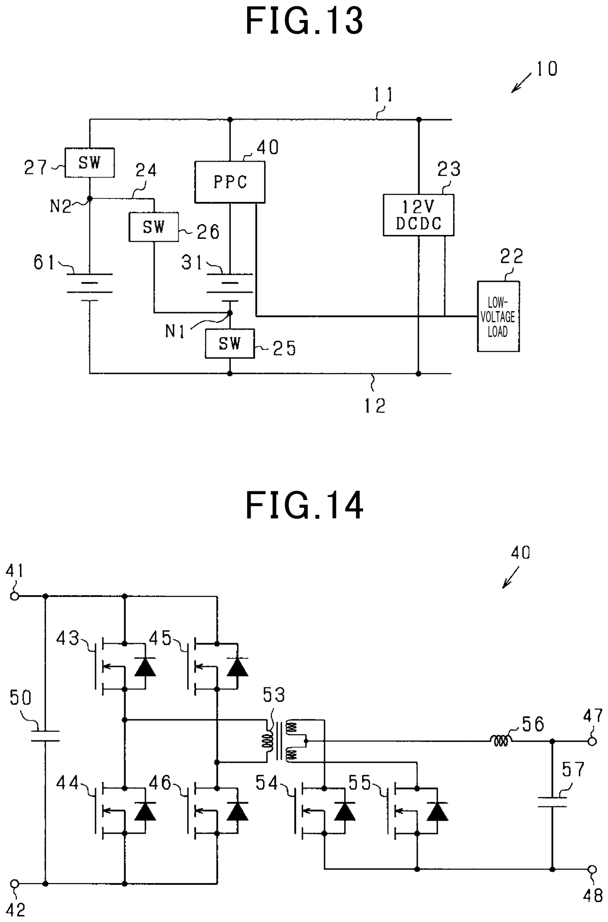

As shown in Fig. 13, the power supply system 10 may include a switching circuit that switches between a state in which the storage batteries 31 and 61 are connected in parallel to the buses 11 and 12 and a state in which the storage batteries 31 and 61 are connected in series to the buses 11 and 12. For example, the switching circuit may include a path 24 and relays 25 to 27. The relay 25 (switch) is provided between the negative electrode of the first storage battery 31 and the bus 12. The relay 27 (switch) is provided between the positive electrode of the second storage battery 61 and the bus 11. The path 24 connects a connection point N1 between the negative electrode of the first storage battery 31 and the relay 25 and a connection point N2 between the positive electrode of the second storage battery 61 and the relay 27. The relay 26 (switch) is provided on the path 24. The relays 25 to 27 are controlled by the ECU 16.

As a result of the above-described configuration, the ECU 16 can switch the first storage battery 31 and the second storage battery 61 to be connected in parallel to the buses 11 and 12 by turning on (connecting) the relays 25 and 27 and turning off (disconnecting) the relay 26. In addition, the ECU 16 can switch the first storage battery 31 and the second storage battery 61 to be connected in series to the buses 11 and 12 by turning off (disconnecting) the relays 25 and 27 and turning on (connecting) the relay 26. When the storage batteries 31 and 61 are switched to parallel connection by the switching circuit, power can be supplied from the storage batteries 31 and 61 to the buses 11 and 12. Therefore, the storage batteries 31 and 61 can be used as redundant high-voltage power supplies. Then, in the state in which the storage batteries 31 and 61 are switched to parallel connection by the switching circuit, the ECU 16 can perform control similar to the above-described control of the power supply system 10 and modifications thereof. Furthermore, when the storage batteries 31 and 61 are switched to series connection by the switching circuit, a voltage that is a sum of the output voltages of the first storage battery 31, the first conversion circuit 40, and the second storage battery 61 can be supplied to the buses 11 and 12. Therefore, the storage batteries 31 and 61 can be used as power supplies having higher voltages. Moreover, when the storage batteries 31 and 61 are switched to series connection by the switching circuit (a mode in which the storage batteries 31 and 61 are not connected in parallel to the buses 11 and 12), the ECU 16 can execute the 12V-DCDC mode (low-voltage power supply mode).

As the high-voltage load 21, for example, two or more combinations of an inverter and a motor generator (MG) (a motor unit with an inverter) may be connected in parallel to the buses 11 and 12. In this case, a number of storage battery modules or storage batteries connected to the buses 11 and 12 may be increased based on a number of motor units with an inverter.

As shown in Fig. 14, in the first conversion circuit 40 (conversion circuit), the diodes 54A and 55A in Fig. 2 may be changed to switching elements 54 and 55. The control unit 16b may then control the switching elements 43 to 46, 54, and 55 based on the detection values of the voltage sensors 51 and 59 and the current sensors 52 and 58. As a result of such a configuration as well, working effects similar to those of the first conversion circuit 40 in Fig. 2 can be achieved. This similarly applies to the second conversion circuit 70 and the like (conversion circuit).

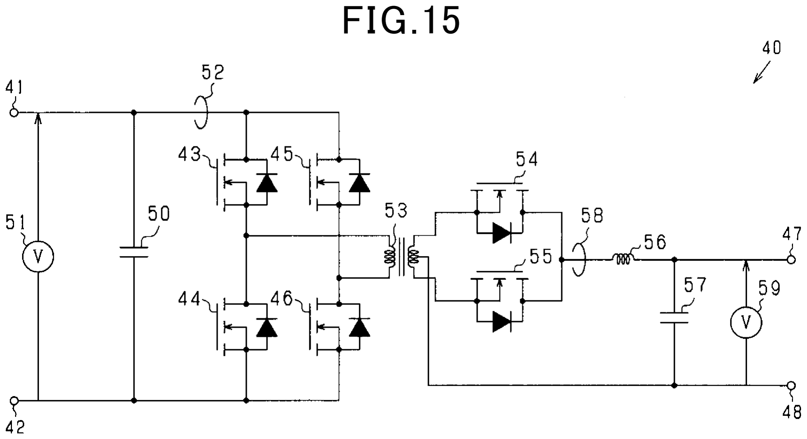

As shown in Fig. 15, in the first conversion circuit 40 (conversion circuit), the switching elements 54 and 55 in Fig. 14 may be connected between the secondary-side coil of the transformer 53 and the reactor 56. As a result of such a configuration as well, working effects similar to those of the first conversion circuit 40 in Fig. 2 and 14 can be achieved. This similarly applies to the second conversion circuit 70 and the like (conversion circuit).

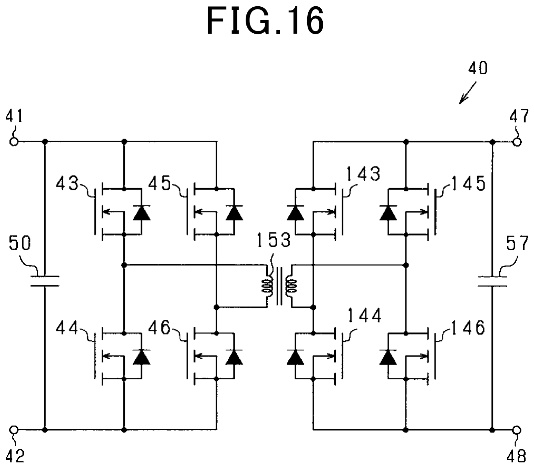

As shown in Fig. 16, the first conversion circuit 40 (conversion circuit) may be a well-known isolated DCDC converter including a non-center-tapped transformer 153 and a secondary-side full-bridge circuit composed of switching elements 143 to 146. For example, the switching elements 143 to 146 may be FETs or IGBTs. The switching elements 143 to 146 are controlled by the ECU 16. This similarly applies to the second conversion circuit 70 and the like (conversion circuit).

A resonant DCDC converter can also be used as the first conversion circuit 40 (conversion circuit). In addition, a non-isolated DCDC converter such as a buck converter can also be used as the first conversion circuit 40 (conversion circuit). This similarly applies to the second conversion circuit 70 and the like (conversion circuit).

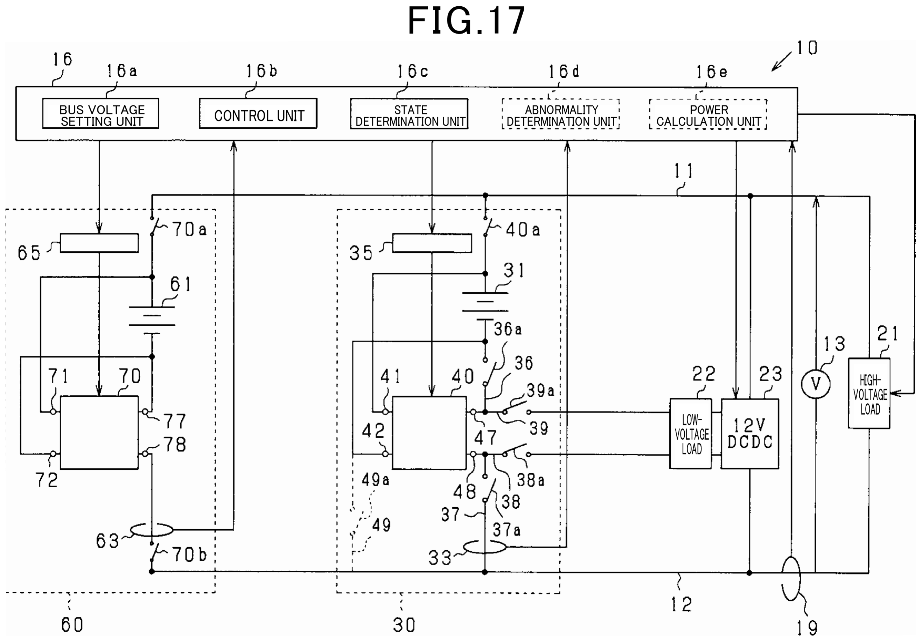

The storage battery modules 30 and 60 may be configured as shown in Fig. 17. That is, the positive electrode of the first storage battery 31 is connected to the bus 11. The primary-side positive electrode terminal 41 of the first conversion circuit 40 is connected to the positive electrode of the first storage battery 31. The primary-side negative electrode terminal 42 of the first conversion circuit 40 is connected to the negative electrode of the first storage battery 31. In addition, the secondar-side positive electrode terminal 47 of the first conversion circuit 40 is connected to the negative electrode of the first storage battery 31 by the first path 36. The secondary-side negative electrode terminal 48 of the first conversion circuit 40 is connected to the bus 12 by the second path 37. In this case as well, the positive electrode and the negative electrode of the first storage battery 31 are respectively connected to the primary-side terminal pair 41 and 42 of the first conversion circuit 40. The first path 36 (series path) connects the secondary-side positive electrode terminal 47 (secondary-side terminal pair 47 and 48 ) of the first conversion circuit 40 to the first storage battery 31 in series. The first path 36 is provided with the first relay 36a. The second path 37 (bus connection path) connects the secondary-side negative electrode terminal 48 that, of the secondary-side terminal pair 47 and 48 of the first conversion circuit 40, is on a side opposite the first storage battery 31, to the bus 12. The second path 37 is provided with the second relay 37a. The third path 38, the third relay 38a, the fourth path 39, and the fourth relay 39a are similar to those of the power supply system 10 in Fig. 1. Therefore, the secondary-side terminal pair 47 and 48 of the first conversion circuit 40 are connectable in series to the first storage battery 31. The secondary-side terminal pair 47 and 48 of the first conversion circuit 40 are connectable in parallel to the low-voltage load 22. As a result of such a configuration as well, working effects similar to those according to the above-described embodiments and modifications can be achieved.

In addition, the first storage battery module 30 may also include the predetermined path 49 and the predetermined relay 49a. The predetermined path 49 connects the primary-side negative electrode terminal 42 of the first conversion circuit 40 to the bus 12. That is, the predetermined path 49 connects the primary-side negative electrode terminal 42 (primary-side terminal) that, of the primary-side terminal pair 41 and 42 of the first conversion circuit 40, is connected between the first storage battery 31 and the secondary-side positive electrode terminal 47 (secondary-side terminal pair), to the bus 12 (power supply bus). For example, the predetermined relay 49a may be configured by an FET or an IGBT, and disconnects and connects the predetermined path 49. As a result of such a configuration, power can be directly supplied from the first storage battery 31 to the buses 11 and 12 by the predetermined path 49 being connected by the predetermined relay 49a. Therefore, for example, in a state in which the first relay 36a and the second relay 37a are disconnected and the third relay 38a and the fourth relay 39a are connected, power can be supplied to the buses 11 and 12 and the low-voltage load 22 while the high-voltage path and the low-voltage path are isolated from each other.

At least one of the functions of the bus voltage setting unit 16a, the control unit 16b, the state determination unit 16c, the abnormality determination unit 16d, and the power calculation unit 16e of the ECU 16 can also be implemented by, for example, a power control ECU (Electronic Control Unit) that controls power of the vehicle, or a vehicle control ECU (host ECU) that performs overall control of the vehicle. In addition, the power supply system 10 can also be mounted in an electric moving body such as an electric aircraft or an electric ship.

The storage batteries 31 and 61 (main batteries) may be batteries that supply a voltage lower than several hundred volts, such as 24 [V], 48 [V], or 60 [V]. The low-voltage load 22 may be a load that is supplied power that is the power supplied from the storage batteries 31 and 61 (buses 11 and 12) and stepped down. In addition, the storage batteries 31 and 61 (main batteries) may be batteries that supply a high voltage that is higher than several hundred volts. The low-voltage load 22 may be a load that is supplied power that is the power supplied from the storage batteries 31 and 61 (buses 11 and 12) and stepped down.

At least one of the functions of the bus voltage setting unit 16a, the control unit 16b, the state determination unit 16c, the abnormality determination unit 16d, and the power calculation unit 16e of the ECU 16 can also be implemented by, for example, a power control ECU (Electronic Control Unit) that controls power of an electric car, or a vehicle control ECU (host ECU) that performs overall control of an electric car. In addition, in a case in which the power supply system 10 is used as a stationary power supply, for example, the functions of the bus voltage setting unit 16a, the control unit 16b, the state determination unit 16c, the abnormality determination unit 16d, and the power calculation unit 16e of the ECU 16 can also be implemented by a stationary power supply control ECU (control apparatus) that controls the stationary power supply.

The ECU 16 and a method thereof described in the present disclosure may be implemented by a dedicated computer that is provided so as to be configured by a processor and a memory, the processor being programmed to provide one or a plurality of functions (commands) that are implemented by a computer program. Alternatively, the ECU 16 and a method thereof described in the present disclosure may be implemented by a dedicated computer that is provided by a processor being configured by one or more dedicated hardware logic circuits. Still alternatively, the ECU 16 and a method thereof described in the present disclosure may be implemented by one or more dedicated computers. The dedicated computer may be configured by a combination of a processor that is programmed to provide one or a plurality of functions, a memory, and a processor that is configured by one or more hardware logic circuits. In addition, the computer program may be stored in a non-transitory, tangible storage medium that can be read by a computer as instructions performed by the computer.

The above-described embodiments and modifications can be combined within the scope of possible combinations.

Characteristic configurations extracted from the above-described embodiments and modifications are described below.

### [Configuration 1]

A power supply system (10) including: a plurality of main batteries (31, 61) that are connected in parallel to a power supply bus (11, 12); and at least a single conversion circuit (40) that converts power input from the main batteries to a primary-side terminal pair (41, 42) and outputs the converted power from a secondary-side terminal pair (47, 48), in which: a positive electrode and a negative electrode of the main battery are respectively connected to the primary-side terminal pair of the conversion circuit; the secondary-side terminal pair of the conversion circuit are connectable in series to the main battery; and the secondary-side terminal pair of the conversion circuit are connectable in parallel to a low-voltage load (22).

### [Configuration 2]

The power supply system according to the configuration 1, further including: a series path (36) that connects the secondary-side terminal pair of the conversion circuit to the main battery in series; a first relay (36a) that disconnects and connects the series path; a bus connection path (37) that connects a secondary-side terminal that, of the secondary-side terminal pair of the conversion circuit, is on a side opposite the main battery, to the power supply bus; a second relay (37a) that disconnects and connects the bus connection path; a negative-electrode-side path (38) and a positive-electrode-side path (39) that connect the secondary-side terminal pair of the conversion circuit to the low-voltage load in parallel; a third relay (38a) that disconnects and connects the negative-electrode-side path; and a fourth relay (39a) that disconnects and connects the positive-electrode-side path.

### [Configuration 3]

The power supply system according to the configuration 2, further including: a control unit (16b) that connects the first relay and the second relay and disconnects the third relay and the fourth relay in response to executing a voltage adjustment mode in which power is supplied from the secondary-side terminal pair of the conversion circuit to the power supply bus, and that disconnects the first relay and the second relay and connects the third relay and the fourth relay in response to executing a low-voltage power supply mode in which power is supplied from the secondary-side terminal pair of the conversion circuit to the low-voltage load.

### [Configuration 4]

The power supply system according to the configuration 3, in which: the control unit disconnects the third relay and the fourth relay and then connects the first relay and the second relay in response to executing the voltage adjustment mode, and disconnects the first relay and the second relay and then connects the third relay and the fourth relay in response to executing the low-voltage power supply mode.

### [Configuration 5]

The power supply system according to the configuration 3 or 4, further including: a step-down converter (23) that is connected to the power supply bus, steps down voltage of power input from the power supply bus, and outputs the stepped-down power to the low-voltage load, in which the control unit performs switching from the low-voltage power supply mode to the voltage adjustment mode after starting the step-down converter, and stops the step-down converter after performing switching from the voltage adjustment mode to the low-voltage power supply mode.

### [Configuration 6]

The power supply system according to the configuration 1 or 2, in which: the power supply system is mounted in a vehicle and includes a state determination unit (16c) that determines a state of the vehicle, and a control unit (16b) that executes a voltage adjustment mode in which power is supplied from the secondary-side terminal pair of the conversion circuit to the power supply bus in response to the state determination unit determining that the vehicle is in a mode in which the plurality of main batteries are connected in parallel to the power supply bus and charged or discharged, and executes a low-voltage power supply mode in which power is supplied from the secondary-side terminal pair of the conversion circuit to the low-voltage load in response to the state determination unit determining that the vehicle is in a mode in which the plurality of main batteries are not connected in parallel to the power supply bus or a mode in which the plurality of main batteries are not charged or discharged.

### [Configuration 7]

The power supply system according to the configuration 1 or 2, in which: a low-voltage power supply (23) is connected to the low-voltage load; and the power supply system includes an abnormality determination unit (16d) that determines whether the low-voltage power supply is abnormal, and a control unit (16b) that executes a voltage adjustment mode in which power is supplied from the secondary-side terminal pair of the conversion circuit to the power supply bus in response to the abnormality determination unit determining that the low-voltage power supply is not abnormal, and executes a low-voltage power supply mode in which power is supplied from the secondary-side terminal pair of the conversion circuit to the low-voltage load in response to the abnormality determination unit determining that the low-voltage power supply is abnormal.

### [Configuration 8]

The power supply system according to the configuration 1 or 2, in which: a high-voltage load (21, 21A) is connected to the power supply bus; and the power supply system includes a power calculation unit (16e) that calculates a high-voltage power request value that is power requested by the high-voltage load, and a low-voltage power request value that is power requested by the low-voltage load, and a control unit (16b) that executes a voltage adjustment mode in which power is supplied from the secondary-side terminal pair of the conversion circuit to the power supply bus in response to the high-voltage power request value calculated by the power calculation unit being greater than a first prescribed value or in response to the low-voltage power request value calculated by the power calculation unit being less than a second prescribed value, and executes a low-voltage power supply mode in which power is supplied from the secondary-side terminal pair of the conversion circuit to the low-voltage load in response to the high-voltage power request value calculated by the power calculation unit being less than the first prescribed value or in response to the low-voltage power request value calculated by the power calculation unit being greater than the second prescribed value.

### [Configuration 9]

The power supply system according to the configuration 1 or 2, in which: the conversion circuit includes a secondary-side voltage sensor (59) that detects a voltage across the secondary-side terminal pair; and the power supply system includes a control unit (16b) that controls an output voltage of the conversion circuit based on the voltage detected by the secondary-side voltage sensor during execution of a voltage adjustment mode in which power is supplied from the secondary-side terminal pair of the conversion circuit to the power supply bus, and controls the output voltage of the conversion circuit based on the voltage detected by the secondary-side voltage sensor during execution of a low-voltage power supply mode in which power is supplied from the secondary-side terminal pair of the conversion circuit to the low-voltage load.

### [Configuration 10]

The power supply system according to any one of the configurations 1 to 9, in which: a high-voltage load (21C) is connected to the main battery (31) to which the secondary-side terminal pair of the conversion circuit are connectable in series, or a charging apparatus (21B) is connected to the main battery (61) to which the secondary-side terminal pair of the conversion circuit is not able to be connected in series.

### [Configuration 11]

The power supply system according to any one of the configurations 1 to 10, further including: a predetermined path (49) that connects a primary-side terminal that, of the primary-side terminal pair of the conversion circuit, is connected between the main battery and the secondary-side terminal pair, to the power supply bus; and a predetermined relay (49a) that disconnects and connects the predetermined path.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

## Claims

1. A power supply system (10) comprising:
a plurality of main batteries (31, 61) that are connected in parallel to a power supply bus (11, 12); and
at least a single conversion circuit (40) that converts power input from the main batteries to a primary-side terminal pair (41, 42) and outputs the converted power from a secondary-side terminal pair (47, 48), wherein:
a positive electrode and a negative electrode of the main battery are respectively connected to the primary-side terminal pair of the conversion circuit;
the secondary-side terminal pair of the conversion circuit are connectable in series to the main battery; and
the secondary-side terminal pair of the conversion circuit are connectable in parallel to a low-voltage load (22).

2. The power supply system according to claim 1, further comprising:
a series path (36) that connects the secondary-side terminal pair of the conversion circuit to the main battery in series;
a first relay (36a) that disconnects and connects the series path;
a bus connection path (37) that connects a secondary-side terminal that, of the secondary-side terminal pair of the conversion circuit, is on a side opposite the main battery, to the power supply bus;
a second relay (37a) that disconnects and connects the bus connection path;
a negative-electrode-side path (38) and a positive-electrode-side path (39) that connect the secondary-side terminal pair of the conversion circuit to the low-voltage load in parallel;
a third relay (38a) that disconnects and connects the negative-electrode-side path; and
a fourth relay (39a) that disconnects and connects the positive-electrode-side path.

3. The power supply system according to claim 2, further comprising:
a control unit (16b) that connects the first relay and the second relay and disconnects the third relay and the fourth relay in response to executing a voltage adjustment mode in which power is supplied from the secondary-side terminal pair of the conversion circuit to the power supply bus, and that disconnects the first relay and the second relay and connects the third relay and the fourth relay in response to executing a low-voltage power supply mode in which power is supplied from the secondary-side terminal pair of the conversion circuit to the low-voltage load.

4. The power supply system according to claim 3, wherein:
the control unit disconnects the third relay and the fourth relay and then connects the first relay and the second relay in response to executing the voltage adjustment mode, and disconnects the first relay and the second relay and then connects the third relay and the fourth relay in response to executing the low-voltage power supply mode.

5. The power supply system according to claim 3 or 4, further comprising:
a step-down converter (23) that is connected to the power supply bus, steps down voltage of power input from the power supply bus, and outputs the stepped-down power to the low-voltage load, wherein
the control unit performs switching from the low-voltage power supply mode to the voltage adjustment mode after starting the step-down converter, and stops the step-down converter after performing switching from the voltage adjustment mode to the low-voltage power supply mode.

6. The power supply system according to claim 1 or 2, wherein:
the power supply system is mounted in a vehicle and includes
a state determination unit (16c) that determines a state of the vehicle, and
a control unit (16b) that
executes a voltage adjustment mode in which power is supplied from the secondary-side terminal pair of the conversion circuit to the power supply bus in response to the state determination unit determining that the vehicle is in a mode in which the plurality of main batteries are connected in parallel to the power supply bus and charged or discharged, and
executes a low-voltage power supply mode in which power is supplied from the secondary-side terminal pair of the conversion circuit to the low-voltage load in response to the state determination unit determining that the vehicle is in a mode in which the plurality of main batteries are not connected in parallel to the power supply bus or a mode in which the plurality of main batteries are not charged or discharged.

7. The power supply system according to claim 1 or 2, wherein:
a low-voltage power supply (23) is connected to the low-voltage load; and
the power supply system includes
an abnormality determination unit (16d) that determines whether the low-voltage power supply is abnormal, and
a control unit (16b) that executes a voltage adjustment mode in which power is supplied from the secondary-side terminal pair of the conversion circuit to the power supply bus in response to the abnormality determination unit determining that the low-voltage power supply is not abnormal, and executes a low-voltage power supply mode in which power is supplied from the secondary-side terminal pair of the conversion circuit to the low-voltage load in response to the abnormality determination unit determining that the low-voltage power supply is abnormal.

8. The power supply system according to claim 1 or 2, wherein:
a high-voltage load (21, 21A) is connected to the power supply bus; and
the power supply system includes
a power calculation unit (16e) that calculates a high-voltage power request value that is power requested by the high-voltage load, and a low-voltage power request value that is power requested by the low-voltage load, and
a control unit (16b) that executes a voltage adjustment mode in which power is supplied from the secondary-side terminal pair of the conversion circuit to the power supply bus in response to the high-voltage power request value calculated by the power calculation unit being greater than a first prescribed value or in response to the low-voltage power request value calculated by the power calculation unit being less than a second prescribed value, and executes a low-voltage power supply mode in which power is supplied from the secondary-side terminal pair of the conversion circuit to the low-voltage load in response to the high-voltage power request value calculated by the power calculation unit being less than the first prescribed value or in response to the low-voltage power request value calculated by the power calculation unit being greater than the second prescribed value.

9. The power supply system according to claim 1 or 2, wherein:
the conversion circuit includes a secondary-side voltage sensor (59) that detects a voltage across the secondary-side terminal pair; and
the power supply system includes a control unit (16b) that controls an output voltage of the conversion circuit based on the voltage detected by the secondary-side voltage sensor during execution of a voltage adjustment mode in which power is supplied from the secondary-side terminal pair of the conversion circuit to the power supply bus, and controls the output voltage of the conversion circuit based on the voltage detected by the secondary-side voltage sensor during execution of a low-voltage power supply mode in which power is supplied from the secondary-side terminal pair of the conversion circuit to the low-voltage load.

10. The power supply system according to any one of claims 1 to 4, wherein:
a high-voltage load (21C) is connected to the main battery (31) to which the secondary-side terminal pair of the conversion circuit are connectable in series, or a charging apparatus (21B) is connected to the main battery (61) to which the secondary-side terminal pair of the conversion circuit is not able to be connected in series.

11. The power supply system according to any one of claims 1 to 4, further comprising:
a predetermined path (49) that connects a primary-side terminal that, of the primary-side terminal pair of the conversion circuit, is connected between the main battery and the secondary-side terminal pair, to the power supply bus; and
a predetermined relay (49a) that disconnects and connects the predetermined path.

12. A control program applicable to a power supply system (10) that includes:
a plurality of main batteries (31, 61) connected in parallel to a power supply bus (11, 12);
at least a single conversion circuit (40) that converts power input from the main batteries to a primary-side terminal pair (41, 42) and outputs the converted power from a secondary-side terminal pair (47, 48);
a series path (36) that connects the secondary-side terminal pair of the conversion circuit to the main battery in series; a first relay (36a) that disconnects and connects the series path; a bus connection path (37) that connects a secondary-side terminal that, of the secondary-side terminal pair of the conversion circuit, is on a side opposite the main battery, to the power supply bus;
a second relay (37a) that disconnects and connects the bus connection path; a negative-electrode-side path (38) and a positive-electrode-side path (39) that connect the secondary-side terminal pair of the conversion circuit to a low-voltage load (22) in parallel;
a third relay (38a) that disconnects and connects the negative-electrode-side path; and a fourth relay (39a) that disconnects and connects the positive-electrode-side path, in which a positive electrode and a negative electrode of the main battery are respectively connected to the primary-side terminal pair of the conversion circuit, the secondary-side terminal pair of the conversion circuit are connectable in series to the main battery, and the secondary-side terminal pair of the conversion circuit are connectable in parallel to the low-voltage load,
the control program causing a computer (16) to perform:
a process in which the first relay and the second relay are connected and the third relay and the fourth relay are disconnected in response to a voltage adjustment mode in which power is supplied from the secondary-side terminal pair of the conversion circuit to the power supply bus being executed, and the first relay and the second relay are disconnected and the third relay and the fourth relay are connected in response to a low-voltage power supply mode in which power is supplied from the secondary-side terminal pair of the conversion circuit to the low-voltage load being executed.
